# EUROPÄISCHE PATENTSCHRIFT

(11) **EP 3 084 248 B1**
(45) Veröffentlichungstag und Bekanntmachung des Hinweises auf die Patenterteilung: **13.09.2017**
(21) Anmeldenummer: 14816121.9
(22) Anmeldetag: 26.11.2014
(51) Int. Cl.: F16D 13/04, F16D 13/52, F16D 25/065, F16D 25/12, F16D 25/0635, F16D 48/02

(54) **KUPPLUNGSVORRICHTUNG MIT VOLL INTEGRIERTER HYDRAULIK**
CLUTCH DEVICE WITH FULLY INTEGRATED HYDRAULICS
DISPOSITIF D'EMBRAYAGE À HYDRAULIQUE ENTIÈREMENT INTÉGRÉE

(30) Priorität: 16.12.2013 DE 102013226096
(43) Veröffentlichungstag der Anmeldung: 26.10.2016
(73) Patentinhaber: Schaeffler Technologies AG & Co. KG, 91074 Herzogenaurach (DE)
(72) Erfinder: HERKOMMER, Dominik, 69198 Schriesheim (DE); BAEHR, Markus, 77815 Bühl (DE); GRETHEL, Marco, 77830 Bühlertal (DE)
(86) Internationale Anmeldenummer: PCT/DE2014/200657
(87) Internationale Veröffentlichungsnummer: WO 2015/090310

(56) Entgegenhaltungen:
- EP-A1- 1 338 814
- DE-A1- 1 530 771
- DE-A1- 3 701 912

## Beschreibung

Die Erfindung betrifft eine Kupplungsvorrichtung (auch als Bausatz aus Kupplung (Reibungskupplung/ Reibkupplung) und Kupplungsaktor bezeichnet) für einen Antriebsstrang eines Kraftfahrzeuges, etwa einem PKW, LKW, Bus oder landwirtschaftlichen Nutzfahrzeug, mit einer in axialer Richtung der Kupplungsvorrichtung verschiebbaren Anpressplatte, wobei die Anpressplatte in einer eingekuppelten Stellung der Kupplungsvorrichtung eine Kupplungsscheibe gegen eine, mit einer Kurbelwelle einer Verbrennungskraftmaschine verbindbare Gegendruckplatte anpresst, und mit einer, einen verschiebbaren Betätigungskolben aufweisenden Betätigungseinrichtung, wobei die Verschiebelage des Betätigungskolbens die Stellung der Anpressplatte festlegt und der Betätigungskolben zum Verschieben der Anpressplatte zwischen der eingekuppelten Stellung und einer ausgekuppelten Stellung von einer Antriebseinheit der Betätigungseinrichtung antreibbar ist.

Entsprechende Kupplungsvorrichtungen/ Kupplungssysteme sind bereits aus dem Stand der Technik bekannt. Beispielsweise offenbart die DE 10 2005 014 633 A1 eine Kupplung und eine Kupplungsaktorik sowie ein Verfahren zum Betätigen zumindest einer Kupplung in einem Antriebsstrang eines Fahrzeuges. Die Kupplungsaktorik umfasst einen elektromotorischen Stellantrieb und eine Ausrückanordnung, mit der eine Rotationsbewegung des Stellantriebes in eine translatorische Ausrückbewegung eines Ausrückers zum Bewegen der Kupplung umgesetzt wird, wobei der Ausrücker (Ausrückanordnung) aus einem Bandgetriebe besteht, das ein Außenteil und ein Innenteil aufweist und der Stellantrieb für den Ausrücker von einem Elektromotor gebildet wird, wobei das Außenteil des Bandgetriebes mit der Kurbelwelle des Verbrennungsmotors und das Innenteil des Bandgetriebes mit dem Rotor des Elektromotors gekoppelt ist.

Bekannte Kupplungssysteme greifen jedoch vorwiegend auf eine elektromotorische Betätigung zurück, wobei die zur Bewegung/ Verstellung des Betätigungskolbens benötigte Betätigungsenergie elektromotorisch erzeugt wird. Zudem sind die bekannten Kupplungssysteme, umfassend die Aktorik, aus mehreren einzelnen Komponenten zusammengesetzt, die erst beim Erstausrüster (OEM/ Original Equipment Manufacturer) vollständig zusammengeführt werden.

Weiterhin sind auch Elektronikkupplungen bekannt, wobei in der Kupplung / Kupplungsvorrichtung kleine Elektromotoren sitzen, die über Rampen und eine damit verbundene Boosterfunktion die Kupplung betätigen. Für diese elektromotorische Erzeugung der Betätigungsenergie werden jedoch zunächst relativ kostenintensive Motoren und deren Steuerelektronik benötigt. Weiterhin wird die Energie für diese Motoren zunächst über die Lichtmaschine dem Antriebsstrang entnommen, in der Batterie gespeichert und dann von dort aus verwendet. Die benötigte Energie zur Betätigung der Kupplung wird daher zunächst aufwändig über Generatoren oder externe Pumpen im Antriebsstrang in elektrische Energie umgewandelt. Dabei werden große Verluste erzeugt und alle Bauteile in dieser Kette müssen entsprechend groß ausgelegt sein. Zudem kann es sein, dass die Motoren aufgrund der Bauraumbeschränkungen zu schwach ausgeführt sind. Zwar passen die Motoren in die Kupplung hinein, zur Betätigung sind sie in dieser Dimension dann jedoch zu schwach. Daher wird in diesem Zusammenhang auch üblicherweise eine Boosterfunktion mittels Rampen verwendet, um die Betätigungskraft zu erzeugen. Dies bewirkt jedoch unter Umständen Probleme mit Rupfen und es besteht die Gefahr, dass sich die Kupplung bei zu großen Reibwerten verklemmt. Zudem haben diese sogenannten Boosterkupplungen, die die Energie aus dem Antriebsstrang entnehmen, auch Probleme mit Drehungleichförmigkeiten. Diese führen unter Umständen zu einer Instabilität des Kupplungsmomentes. Weiterhin haben diese Kupplungssysteme den Nachteil, dass sie oft erst beim Kunden (OEM) zusammengebaut werden, weshalb jedoch das Fehlerpotential bei der Montage/ dem vollständigen Zusammenbau relativ hoch ist. Selbst wenn alle Komponenten vorher getestet wurden, so kann es dennoch Probleme geben, die erst beim Zusammenbau mit den übrigen OEM-Teilen auftreten können.

Es ist somit die Aufgabe der vorliegenden Erfindung, die aus dem Stand der Technik bekannten Nachteile zu beheben und eine Kupplungsvorrichtung zur Verfügung zu stellen, die zum einen die Gefahr von Zusammenbaufehlern reduziert, zum anderen eine optimierte Energienutzung gewährleistet.

Dies wird erfindungsgemäß dadurch gelöst, dass die Antriebseinheit zumindest eine Pumpe aufweist, wobei die zumindest eine Pumpe in einem Pumpenaufnahmegehäuse aufgenommen ist und das Pumpenaufnahmegehäuse drehfest mit der Gegendruckplatte verbunden ist.

Dadurch ist eine Antriebseinheit zur Verfügung gestellt, wobei die Betätigungsenergie zur Kupplungsbetätigung unmittelbar und ohne eine zwischengeschaltete Umwandlung in eine andere Energieform, beispielsweise in elektrische Energie, aus dem Antriebsstrang/ der Verbrennungskraftmaschine gewonnen werden kann. Die bei elektrischen Systemen notwendige Energieumwandlung und die damit verbundenen Umwandlungsverluste werden vermieden. Dadurch wird der Wirkungsgrad der Kupplungsbetätigung deutlich gesteigert. Die Energie zur Kupplungsbetätigung wird über die Pumpe möglichst direkt aus dem Antriebsstrang selber aufgenommen und den Betätigungskolben des Nehmerzylinders in der Kupplung zugeführt. Da die Pumpe zudem in der Betätigungsvorrichtung enthalten ist, kann eine besonders kompakte und vollständige Kupplungsvorrichtung samt Betätigungsvorrichtung vorzusammengebaut werden. Dadurch wird die spätere Montage wesentlich vereinfacht.

Weitere vorteilhafte Ausführungen sind in den Unteransprüchen beansprucht und nachfolgend näher erläutert.

Gemäß einer weiteren Ausführungsform ist es von Vorteil, wenn die zumindest eine Pumpe derart ausgestaltet und angeordnet ist, dass sie durch eine Relativbewegung zu einem Gehäusebauteil, das in einem ersten Betriebszustand, etwa bei angeschalteter Verbrennungskraftmaschine, gehäusefest verbunden ist, antreibbar ist. Dadurch ist ein besonders direkter Antrieb der Pumpe möglich.

In diesem Zusammenhang ist es auch vorteilhaft, wenn das Gehäusebauteil in einem zweiten Betriebszustand, etwa bei ausgeschalteter Verbrennungskraftmaschine, über eine weitere, zweite Antriebseinheit antreibbar ist. Dadurch ist auch eine Kupplungsbetätigung in einem Hybridantrieb einfach umsetzbar. In diesem Fall ist die zweite Antriebseinheit als Elektromotor (E-Motor) ausgebildet.

Weiterhin ist es von Vorteil, wenn das Pumpenaufnahmegehäuse koaxial zu einer im Betriebszustand der Kupplungsvorrichtung drehfest mit der Kupplungsscheibe verbundenen Getriebeeingangswelle eines Getriebes angeordnet ist. Dadurch ist eine geschachtelte/ verschachtelte Anordnung des Pumpenaufnahmegehäuses samt Pumpen um die Getriebeeingangswelle möglich. Auch ist das Pumpenaufnahmegehäuse drehfest mit einem Kupplungskörper an der Antriebs- / Motorseite verbunden. Dadurch ist zum einen eine besonders kompakte Anordnung der Pumpe/ der Betätigungseinrichtung umsetzbar, zum anderen ist die Betätigungseinrichtung direkt in das Kupplungsgehäuse der Kupplung integrierbar/ an diesem befestigbar.

Weiterhin ist es von Vorteil, wenn das Pumpenaufnahmegehäuse in axialer Richtung neben einem die Anpressplatte und die Kupplungsscheibe umhüllenden und drehfest mit der Gegendruckplatte verbundenen Kupplungsgehäuse angeordnet ist, wobei das Kupplungsgehäuse vorzugsweise die Gegendruckplatte drehfest mit dem Pumpenaufnahmegehäuse verbindet. Somit wird die Montierbarkeit weiterhin erleichtert, da das Pumpenaufnahmegehäuse in einfacher Weise mit dem Kupplungsgehäuse verbunden werden kann.

Von Vorteil ist es weiterhin, wenn die Pumpe zwei Fluidanschlüsse aufweist, wobei ein erster Fluidanschluss mit einem den Betätigungskolben aufnehmenden Nehmerzylinder verbunden ist und ein zweiter Fluidanschluss mit einem Fluidspeicherraum (in der im Betriebszustand drehenden Kupplung/ Kupplungsgehäuse) verbunden ist. Je nach zu erreichender Kupplungsstellung (eingekuppelte oder ausgekuppelte Stellung) kann somit zusätzliches Druckfluid in den Nehmerzylinder hineingepumpt oder aus diesem abgepumpt werden.

Zweckmäßig ist es auch, wenn die zumindest eine Pumpe als eine verstellbare Pumpe ausgeführt ist, deren Förderrichtung unabhängig von der Pumpenantriebsrichtung (Pumpenantriebsrichtung entspricht Drehrichtung, in die eine Trommel der Pumpe angetrieben wird) umkehrbar ist und dessen Fördervolumen durch Null verstellbar ist (d.h. über eine Neutralstellung der Pumpe, in der der Volumenstrom/Förderhub der Pumpe unabhängig von der Pumpendrehzahl Null ist, hinweg verstellbar ist), wobei ein die Verschiebelage des Betätigungskolbens beeinflussender Fluiddruck in Abhängigkeit der (die Förderrichtung vorgebende) Pumpenstellung steuerbar ist (Der Fluiddruck ist dabei über das Sollsignal (elektrisch) steuerbar und wird in der Pumpe über ein Gleichgewicht zwischen Aktorkraft und Sensorkolbenkraft eingeregelt). Dabei gibt es zumindest drei Pumpenstellungen. Neben der erwähnten Neutralstellung gibt es zumindest eine erste Pumpenstellung, in der der Förderhub derart eingestellt ist, dass ein Druckfluid von dem ersten Fluidanschluss aus zum zweiten Fluidanschluss gefördert wird. In zumindest einer weiteren, zweiten Pumpenstellung wird der Förderhub derart eingestellt ist, dass das Druckfluid dann von dem zweiten Fluidanschluss zu dem ersten Fluidanschluss hin befördert. Beispielsweise kann die zumindest eine Pumpe als eine einstellbare Axialkolbenpumpe ausgeführt sein, die mehrere in einer Trommel verschiebbar gelagerte Pumpenkolben aufweist, wobei die Pumpenkolben in radialer Richtung außerhalb einer zentralen Pumpenantriebswelle angeordnet sind. Der Kolbenhub der Axialkolbenpumpe ist durch eine in der Neigung verstellbare Taumelscheibe einstellbar. Dadurch ist die Pumpe besonders platzsparend ausgestaltbar.

Ist die die Förderrichtung und das Fördervolumen der zumindest einen Pumpe beeinflussende Pumpenstellung durch einen Aktor veränderbar ist, ist die Pumpenverstellung besonders einfach umsetzbar.

Die Aktorik, Verstellung des Fördervolumens der Pumpe, ist dabei günstigerweise so ausgeführt, dass der Aktor eine vorgebbare Kraft/Moment auf die Verstellung ausübt, und auch ein Drucksensor, der als Sensor-Kolben ausgeführt sein kann, eine Kraft/Moment auf die Verstellung ausübt. Durch geeignete Anordnung von Aktor und Drucksensor/ Sensorkolben ergibt sich so eine hydromechanische Druckregelung.

In diesem Zusammenhang ist es von Vorteil, wenn die zumindest eine Pumpe eine Druckregelung aufweist, die die zumindest eine Pumpe bei Erreichen eines bestimmten, durch ein Steuersignal am Aktor vorgegebenen, an dem Betätigungskolben und einem Sensorkolben anliegenden Fluiddrucks, in eine Neutralstellung zurückstellt, in welcher Neutralstellung der Fluiddruck konstant gehalten ist (da der Volumenstrom unabhängig von der Pumpendrehzahl Null ist).

Die Zuführung der Energie und des Signals für den Aktor (das Solldruck-Signal) wird dabei vorzugsweise berührungslos (z.B. induktiv) in das drehende Kupplungssystem übertragen.

Ist weiterhin der Aktor induktiv, etwa über ein Spulensystem, betätigbar, ist der Kolbenhub der zumindest einen Pumpe individuell einstellbar und es kann weiterhin Platz eingespart werden.

Wenn die Pumpenantriebswelle der Pumpe im Wesentlichen parallel zur Kupplungsdrehachse angeordnet/ ausgerichtet ist, ist die Betätigungseinrichtung und deren Pumpe weiterhin noch Platz sparender anordenbar.

Ist die Pumpenantriebswelle weiterhin mit einem Zahnrad drehfest verbunden, welches Zahnrad in eine getriebegehäusefeste Gegenverzahnung eingreift, so ist eine kostengünstig herstellbare Übertragungseinheit umsetzbar, durch die im Betrieb, d.h. bei aktiver Verbrennungskraftmaschine und bei sich drehendem Kupplungsgehäuse, die Pumpe dauerhaft angetrieben ist. Dadurch ist eine besonders stabile Verbindung umsetzbar.

Sind die Pumpenkolben weiterhin mit einer den Pumpenkolbenhub im Betrieb einstellenden Taumelscheibe verbunden, ist die Pumpe vielseitig einsetzbar. Sie kann zum einen für ein rasches Einkuppeln, etwa im druckbeaufschlagten Zustand, sowie zu einem raschen Auskuppeln, etwa bei einer Druckreduzierung, beispielsweise in einer ausgekuppelten Stellung, umgeschaltet werden. Damit werden die Schaltzeiten weiter verbessert/ verkürzt.

Auch ist es von Vorteil, wenn die Kupplungsvorrichtung als eine Doppelkupplung ausgestaltet ist, wobei je eine von zwei Teilkupplungen der Doppelkupplung eine Betätigungseinrichtung aufweist. Dadurch kann auch eine Doppelkupplung besonders platzsparend ausgestaltet werden.

In anderen Worten ausgedrückt, kann somit eine als Einzel- oder Doppelkupplung ausgestaltete Kupplungsvorrichtung umgesetzt werden, bei der die Bedienungsenergie aus dem Antriebsstrang entnommen wird. Dabei wird eine Aktorik für eine Kupplung bereitgestellt, bei der die Energie im Wesentlichen aus dem Antriebsstrang selber aufgenommen wird. Hierfür ist eine Pumpe vorgesehen, die durch eine Relativbewegung der Pumpe zum gehäusefesten Bauteil/ Getriebegehäuse betätigt wird und so in einem Hydraulikkreislauf/ Fluidkreislauf einen Druck aufbaut. Die Relativbewegung kann erreicht werden, indem die Pumpe in einem mitrotierenden Gehäuse bereitgestellt ist und über Zahnräder in ein gehäusefestes Zahnrad eingreift. Auf diese Weise kann eine relative Rotationsbewegung in der Pumpe erzeugt werden. In einer bevorzugten Ausführungsform handelt es sich um eine Axialkolbenpumpe (aber auch andere Pumpen sind denkbar). Durch die Relativbewegung wird die Pumpe relativ zu einer schiefen Ebene (Taumelscheibe) rotiert und kann so in Abhängigkeit von der Schrägstellung der Ebene/ Taumelscheibe einen Druck im Hydraulikkreislauf erzeugen. Weiterhin ist ein Aktor vorgesehen, der auf die Ebene einwirkt und ihre Schrägstellung beeinflusst. Der Aktor ist dafür drahtlos mit Energie versorgbar. Die Steuerelektronik für diesen Aktor ist dabei gehäusefest und bestimmt über die Ansteuerungen des Aktors die Relativlage der schrägen Ebene. Auf diese Weise sind im Hydraulikkreislauf sowohl ein Über- als auch ein Unterdruck erzeugbar. An dem dem Aktor gegenüberliegenden Ende der schiefen Ebene ist vorteilhafterweise weiter ein Sensierkolben/ Sensorkolben angeordnet, der mit dem Hochdruckausgang der Pumpe verbunden ist. Je nach Stellung des Aktors wird die Lage der schiefen Ebene vorgegeben, wodurch dann ein Druck durch den Sensierkolben im Hydraulikkreislauf eingestellt wird, der durch die Pumpe erreicht wird. Es handelt sich dabei um eine Druckregelung. Aktor und Sensorkolben wirken mit jeweils einer Kraft auf die Taumelscheibe. Die Lage der Taumelscheibe ergibt sich aus der Kraftdifferenz zwischen dem Aktor und dem Sensorkolben. Sind die Kräfte gleich, so befindet sich die Taumelscheibe im Gleichgewicht und das Fördervolumen ist 0. Wird die Aktorkraft geändert, gibt die Taumelscheibe der größeren Kraft nach, wodurch die Pumpe solange fördert, bis das Kräftegleichgewicht wieder hergestellt ist. Der Druck wird somit durch den Aktor vorgegeben, wobei der Aktor auf die Ebene wirkt, und durch den Sensorkolben/ Sensierkolben eingestellt. Im Falle von Leckage wird dann Fluid vom Reservoir nachgefördert. Die Aktorik ist sowohl für Einzel- als auch Doppelkupplung verwendbar. Die Kupplung umfasst dafür Pumpe, Nehmerzylinder und Reservoir/ Fluidspeicherraum. Bei einem Hybridantrieb ist die Pumpe mit der Elektromaschine gekoppelt. Das Reservoir umfasst in einer Weiterentwicklung eine Volumenausgleichseinrichtung.

Die Erfindung ist nun nachfolgend anhand von Figuren näher erläutert, wobei mehrere Ausführungsformen dargestellt sind.

Es zeigen:

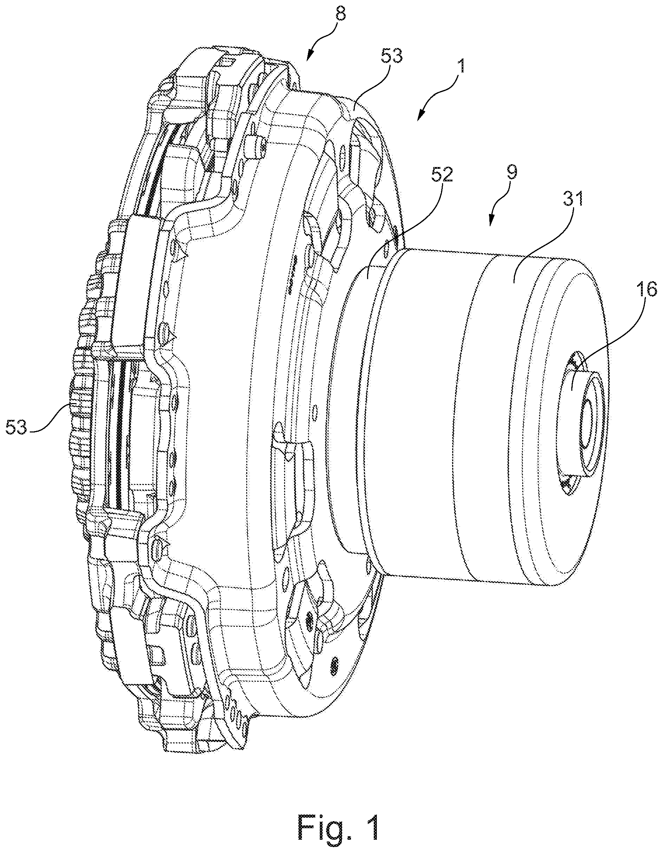

- Fig.1: eine isometrische Darstellung einer erfindungsgemäßen Kupplungsvorrichtung nach einer ersten Ausführungsform, wobei die Kupplungsvorrichtung von einer Außenseite dargestellt ist und insbesondere die Anordnung des Pumpenaufnahmegehäuses der Betätigungseinrichtung an dem Kupplungsgehäuse zu erkennen ist,

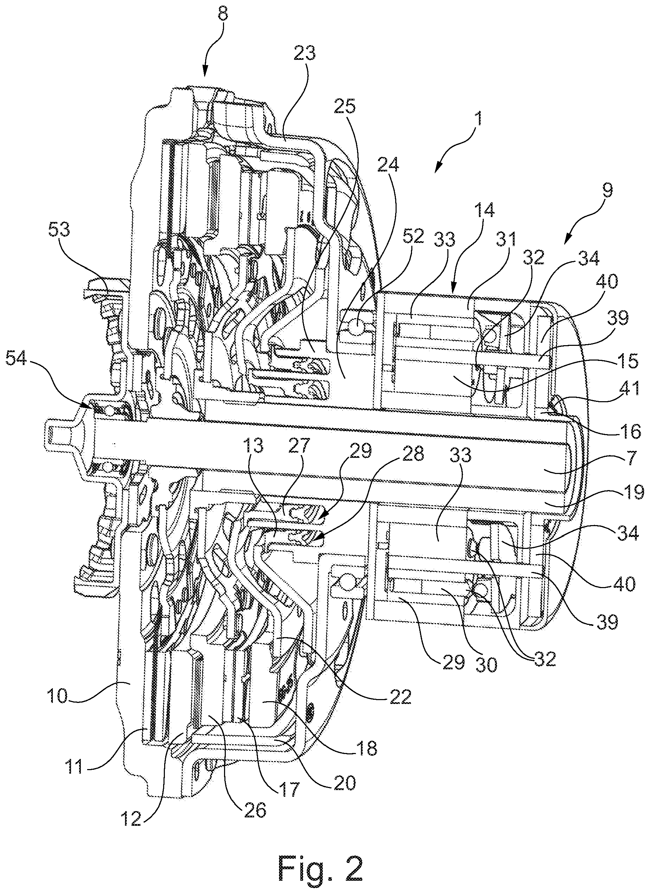

- Fig.2: eine isometrische Längsschnittdarstellung der in Fig.1 bereits gezeigten Kupplungsvorrichtung, wobei die Kupplungsvorrichtung als Doppelkupplung ausgestaltet ist und der innere Aufbau der Kupplungsvorrichtung gut zu erkennen ist, und wobei die Betätigungseinrichtung zwei um den Umfang herum verteilt angeordnete Pumpen aufweist,

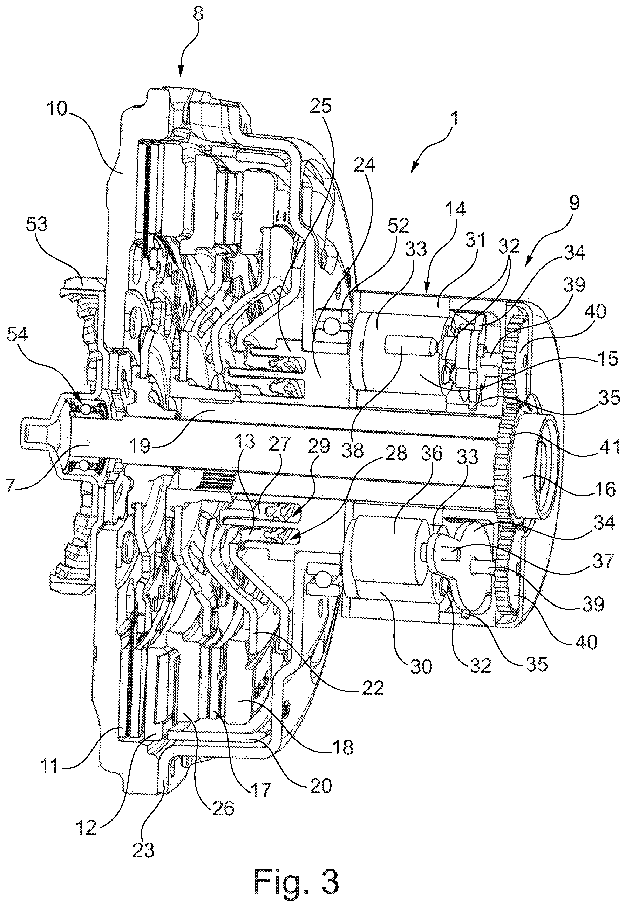

- Fig.3: eine Teilschnittdarstellung der in den Fig.1 und 2 bereits dargestellten Kupplungsvorrichtung, wobei der Schnitt ebenfalls ein Längsschnitt ist, wobei insbesondere die Pumpen nicht mitgeschnitten sind und deren Pumpenantriebswellen, Taumelscheiben und Zahnräder in ihrer dreidimensionalen Erstreckung erkennbar sind,

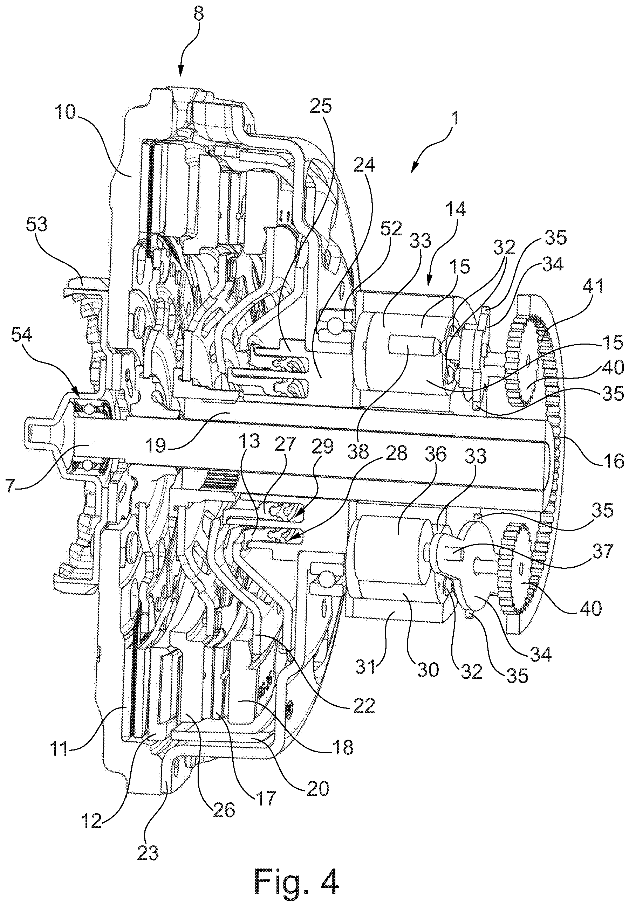

- Fig.4: eine isometrische Längsschnittdarstellung einer erfindungsgemäßen Kupplungsvorrichtung nach einer weiteren, zweiten Ausführungsform, wobei die Zahnräder der Pumpen nicht, wie in Fig.1 bis 3 in eine Außenverzahnung eines gehäusefesten Bauteils eingreifen, sondern in eine Innenverzahnung eines gehäusefesten Zahnrings eingreifen,

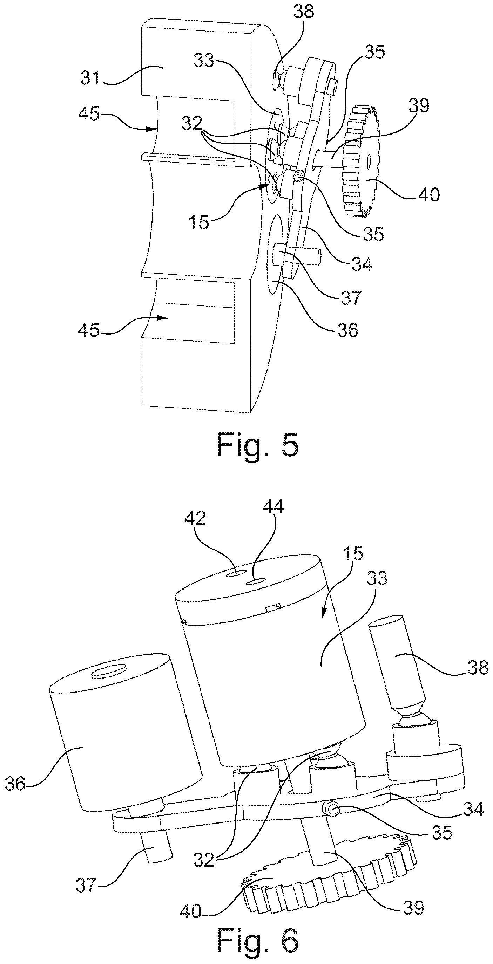

- Fig. 5: eine isometrische Darstellung eines durch einen Längsschnitt geteilten Pumpengehäuses, wie es in der Kupplungsvorrichtung nach einer der Ausführungsformen nach den Fig. 1 bis 4 eingesetzt ist, wobei insbesondere der Bereich um die Taumelscheibe einer der Pumpen herum dargestellt ist, und die Anordnung der Fluidspeicherräume zu erkennen ist,
- Fig.6: eine isometrische Darstellung einer Pumpe samt Taumelscheibe, Aktor sowie Sensorkolben, wobei insbesondere die Anordnung zwischen dem Aktor und dem Sensorkolben sowie den Pumpenkolben der Pumpe verdeutlicht sind,

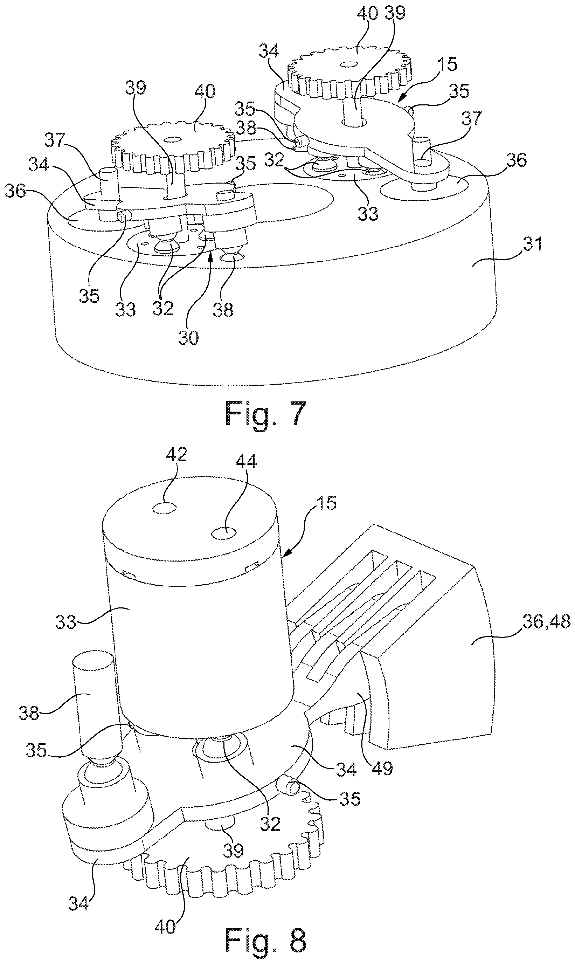

- Fig.7: eine isometrische Darstellung des ungeteilten, die beiden Pumpen aufnehmenden Pumpenaufnahmegehäuses (ähnlich zu Fig. 5), wobei insbesondere die Anordnung der beiden Pumpen zueinander um den Umfang des Pumpenaufnahmegehäuses veranschaulicht ist,
- Fig.8: eine isometrische Darstellung einer weiteren Ausführungsform einer Betätigungseinrichtung einer erfindungsgemäßen Kupplungsvorrichtung, wobei insbesondere der Aktor sowie die Taumelscheibe der Pumpe etwas anders ausgestaltet sind als in den Fig. 1 bis 7,

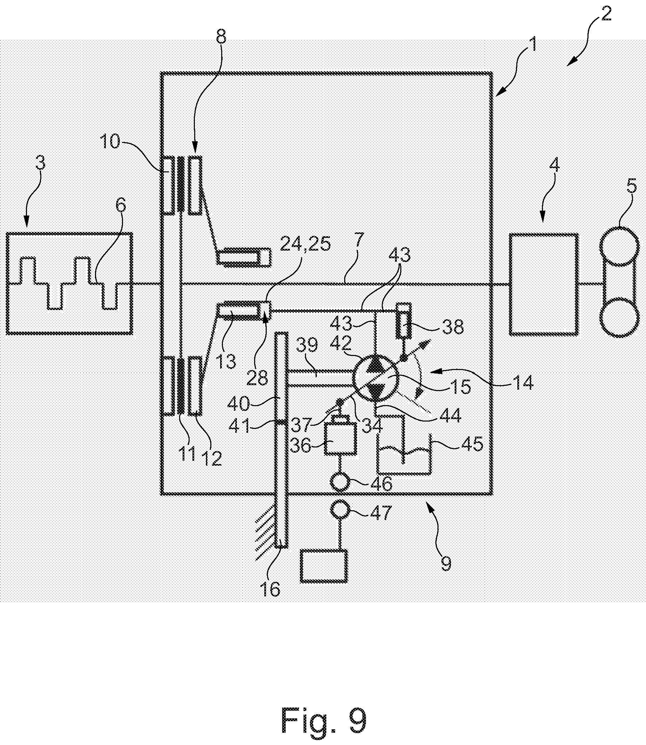

- Fig.9: ein Prinzipschaubild einer erfindungsgemäßen Kupplungsvorrichtung, wobei insbesondere die Funktionsweise einer der Pumpen der Betätigungseinrichtung sowie die Einbaulage der Kupplungsvorrichtung im Antriebsstrang eines Kraftfahrzeuges zu erkennen sind,

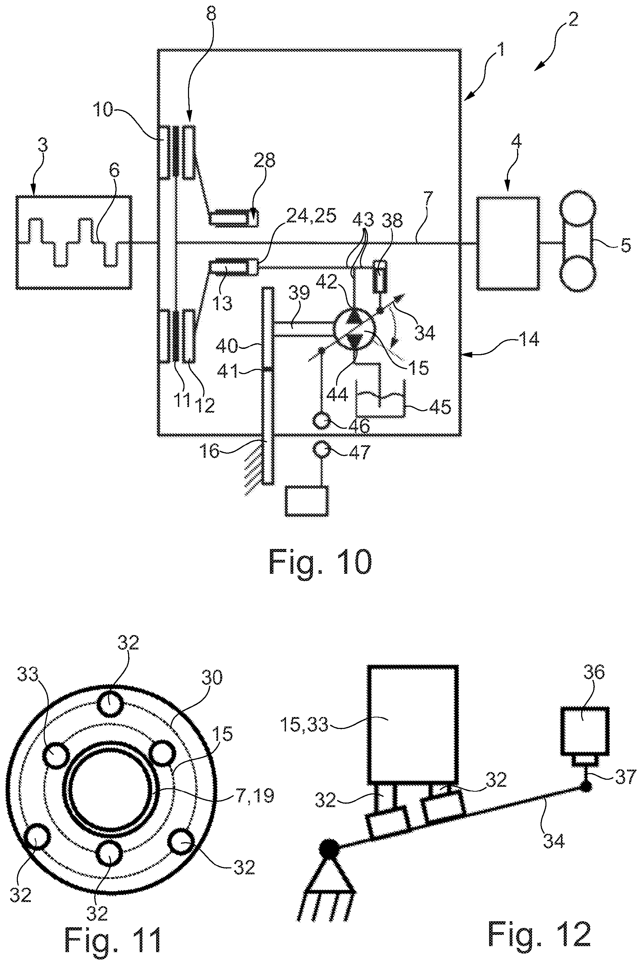

- Fig.10: eine Prinzipdarstellung gemäß der Fig.9, wobei hier eine weitere Ausführungsform der Aktorik abgebildet ist, wobei die Taumelscheibe direkt durch ein induktives Feld verstellbar ist,
- Fig.11: eine schematische Querschnittdarstellung einer geschnittenen Betätigungseinrichtung der erfindungsgemäßen Kupplungsvorrichtung nach einer weiteren Ausführungsform, wobei in diesem Fall die Pumpen derart ausgestaltet sind, dass sie konzentrisch um die Getriebeeingangswelle zueinander, gestapelt angeordnet sind,
- Fig.12: eine schematische Darstellung einer Betätigungseinrichtung der erfindungsgemäßen Kupplungsvorrichtung gemäß einer weiteren Ausführungsform, wobei die Kippachse der Taumelscheibe außerhalb der Mitte der Pumpe/ außermittig zur Pumpe angeordnet ist, und wobei, da die Kolbenkräfte der Pumpe direkt auf die Taumelscheibe wirken, auf einen zusätzlichen Sensorkolben verzichtet werden kann, und

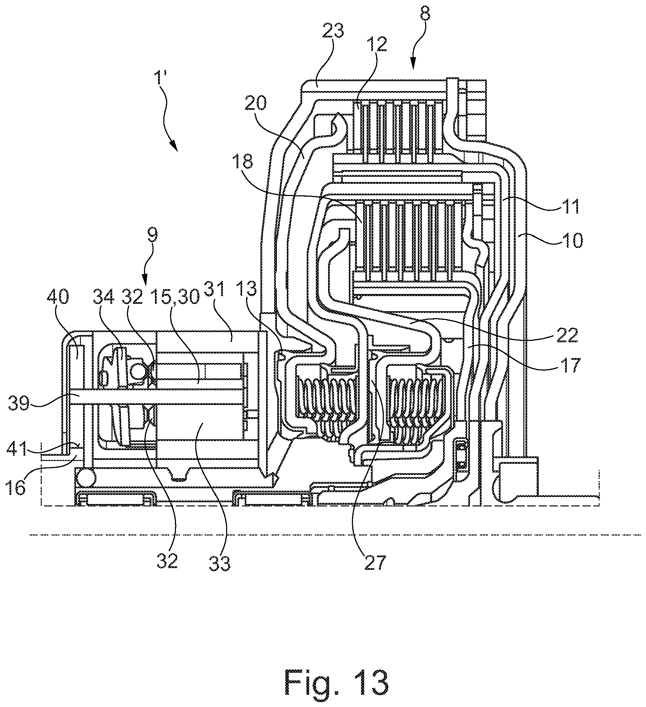

- Fig. 13: eine Längsschnittdarstellung einer weiteren Ausführungsform einer erfindungsgemäßen Kupplungsvorrichtung, wobei hierin die Doppelkupplung als Lamellendoppelkupplung ausgestaltet ist.

Die Figuren sind lediglich schematischer Natur und dienen nur dem Verständnis der Erfindung. Die gleichen Elemente sind mit den gleichen Bezugszeichen versehen.

In den Fig.1 bis 13 sind grundsätzlich verschiedene Ausführungsformen der erfindungsgemä-ßen Kupplungsvorrichtung 1 ausgeführt. Diese dargestellten Kupplungsvorrichtungen 1 sind stets für den Einsatz in einem Antriebsstrang 2 (besonders gut in Fig.9 zu erkennen) eines Kraftfahrzeuges, wie einem PKW, LKW, Bus oder landwirtschaftlichen Nutzfahrzeug vorgesehen. Die Kupplungsvorrichtung 1 dient dabei üblicherweise als ein trennbares Verbindungselement zur wahlweisen Übertragung eines Drehmomentes von einer Kurbelwelle 6 einer Verbrennungskraftmaschine 3, wie einem Otto- oder Dieselmotor, zu einem Getriebe 4, welches Getriebe dann mit einem oder mehreren Rädern 5 des Kraftfahrzeugs weiter verbunden ist. Die Kupplungsvorrichtung 1 weist weiterhin im Wesentlichen zumindest zwei Teilbereiche auf. Zum einen weist die Kupplungsvorrichtung 1 einen Kupplungsbereich (erster Teilbereich) auf, in dem sich die das Drehmoment übertragenden Teile befinden, welcher Kupplungsteil nachfolgend als Kupplung 8 bezeichnet ist. Zum anderen weist die Kupplungsvorrichtung 1 einen Betätigungsbereich auf, in dem die die Stellung der Kupplung steuernden Elemente enthalten sind, welcher Betätigungsbereich nachfolgend als Betätigungseinrichtung 9 bezeichnet ist.

Die als Reibungskupplung ausgeführte Kupplung 8 ist im Wesentlichen wie die aus der DE 10 2005 014 633 A1 bekannte Kupplung aufgebaut und funktionierend, die als hierin integriert gelten soll. Die Reibungskupplung/ Kupplung 8 weist eine in axialer Richtung (entlang der Kupplungsdrehachse) der Kupplungsvorrichtung 1 verschiebbare Anpressplatte 12 auf, wobei die Anpressplatte 12 in einer eingekuppelten Stellung der Kupplungsvorrichtung 1 eine Kupplungsscheibe 11 derart gegen eine Gegendruckplatte 10 vorspannt, dass die Kupplungsscheibe 11 mit der Gegendruckplatte 10 drehfest verbunden ist. In einer ausgekuppelten Stellung ist hingegen die Anpressplatte 12 nicht gegen die Kupplungsscheibe 11 vorgespannt, sodass das Drehmoment nicht von der Gegendruckplatte 10 auf die Kupplungsscheibe 11 übertragen wird. Die Gegendruckplatte 10 ist, wie in den Fig. 1 bis 4 gut zu erkennen ist, als Gehäusedeckel 10 ausgestaltet. Die Kupplungsscheibe 11 sowie die in axialer Richtung der Kupplungsvorrichtung 1 verschiebbare Anpressplatte 12 sind relativ zum Gehäusedeckel / zur Gegendruckplatte 10 verschiebbar.

Die weiterhin in der Kupplungsvorrichtung 1 enthaltene Betätigungseinrichtung 9 weist einen, ebenfalls in der axialen Richtung verschiebbaren Betätigungskolben 13 auf, wobei die Verschiebelage des Betätigungskolbens 13 die Stellung der Anpressplatte 12 festlegt und der Betätigungskolben 13 zum Verschieben der Anpressplatte 12 zwischen der eingekuppelten Stellung und der ausgekuppelten Stellung von einer Antriebseinheit der Betätigungseinrichtung 9 antreibbar ist. Die Antriebseinheit 14 weist dabei eine Pumpe 15 auf, wobei die Pumpe 15 derart ausgestaltet und angeordnet ist, dass sie einen Betriebszustand der Kupplungsvorrichtung 1 durch eine Relativbewegung zu einem Gehäusebauteil 16 antreibbar ist, wobei in Abhängigkeit eines durch die Pumpe 15 gesteuerten Fluiddrucks die Position des Betätigungskolbens 13 veränderbar ist. Das Gehäusebauteil 16 ist in einem ersten Betriebszustand, bei dem die Verbrennungskraftmaschine 3 angeschaltet ist und sich die Kurbelwelle 6 dreht, gehäusefest, etwa getriebehehäusefest (direkt mit dem Getriebegehäuse selbst) verbunden. In einem zweiten Betriebszustand, bei dem die Verbrennungskraftmaschine 3 ausgeschaltet ist und sich die Kurbelwelle 6 nicht dreht/ stillsteht, ist das Gehäusebauteil 16 über eine weitere, zweite Antriebseinheit antreibbar/ angetrieben. Bspw. Ist diese zweite Antriebseinheit wiederum als Elektromotor ausgeführt.

In den Fig.1 bis 3 ist eine erste Ausführungsform der erfindungsgemäßen Kupplungsvorrichtung 1 dargestellt. Die Kupplungsvorrichtung 1 weist eine modulare Bauweise auf, wobei die Bestandteile der Kupplung 8 (nachfolgend auch als Reibungskupplung 8 bezeichnet) sowie die Bestandteile der Betätigungseinrichtung 9 modular, d.h. ineinander integriert, ausgestaltet sind. Die Reibungskupplung 8 ist hier als Doppelkupplung sowie trocken laufend ausgestaltet. Alternativ dazu ist die Reibungskupplung 8 jedoch auch als nass laufende Doppelkupplung 8 und/ oder Einzelkupplung ausgestaltbar.

Neben einem ersten Kupplungsteil, der im Wesentlichen die Gegendruckplatte 10 (nachfolgend auch als Gehäusedeckel oder erste Gegendruckplatte 10 bezeichnet), die Kupplungsscheibe 11, nachfolgend als erste Kupplungsscheibe 11 bezeichnet, sowie die Anpressplatte 12, nachfolgend als erste Anpressplatte 12 bezeichnet, umfasst, weist die Reibungskupplung 8 noch einen zweiten Kupplungsteil auf, der ebenfalls eine Kupplungsscheibe, nachfolgend als zweite Kupplungsscheibe 17 bezeichnet, eine Anpressplatte, nachfolgend als zweite Anpressplatte 18 bezeichnet, sowie eine Gegendruckplatte, nachfolgend als zweite Gegendruckplatte 26 bezeichnet, aufweist. Die erste Kupplungsscheibe 11 ist mit einer ersten Getriebeeingangswelle 7 im Betriebszustand der Kupplungsvorrichtung 1 drehfest verbunden, die zweite Kupplungsscheibe 17 ist im Betriebszustand der Kupplungsvorrichtung 1 mit einer zweiten Getriebeeingangswelle 19 drehfest verbunden. Um die erste Kupplungsscheibe 11 mit dem Gehäusedeckel 10 in reibkraftschlüssigen Kontakt zu bringen, ist ein erstes als Drucktopf ausgestaltetes erstes Verschiebeelement 20 vorgesehen. Dieses erste Verschiebeelement 20 ist derart bewegbar und gegen die erste Anpressplatte 12 andrückbar, dass die erste Anpressplatte 12 in der eingekuppelten Stellung wiederum gegen die erste Kupplungsscheibe 11 und diese dann gegen den Gehäusedeckel 10 angedrückt ist. Dadurch ist die erste Kupplungsscheibe 11 sowie die damit drehfest verbundene erste Getriebeeingangswelle 7 zur Drehmomentübertragung mit dem Gehäusedeckel 10 verbindbar. Der Gehäusedeckel 10 ist wiederum im Betrieb/ in den Betriebszuständen mit der Kurbelwelle 6 der Verbrennungskraftmaschine 3 drehfest verbunden.

Die zweite Gegendruckplatte 26 des zweiten Kupplungsteils ist ebenfalls mit dem Gehäusedeckel 10 und somit mit der Kurbelwelle 6 drehfest verbunden. Die zweite Anpressplatte 18 ist dabei wiederum zusammen mit der zweiten Kupplungsscheibe 17 in axialer Richtung gegenüber der zweiten Gegendruckplatte 26 verschiebbar. Die Stellung der zweiten Anpressplatte 18 ist wieder durch ein als Drucktopf ausgestaltetes zweites Verschiebeelement 22 einstellbar. Die zweite Kupplungsscheibe 17 wird in der eingekuppelten Stellung des zweiten Kupplungsteils wiederum gegen zweite Gegendruckplatte 26 vorgespannt/ gedrückt, so dass es zur Drehverbindung der zweiten Gegendruckplatte 26 mit der zweiten Kupplungsscheibe 17 kommt. Der erste und zweite Kupplungsteil sind weiterhin von einem gemeinsamen Kupplungsgehäuse 23 umgeben/ umhüllt/ umschlossen, welches Kupplungsgehäuse 23 wiederum drehfest mit dem Gehäusedeckel 10 und der zweiten Gegendruckplatte 26 verbunden ist. Das Kupplungsgehäuse 23 zusammen mit dem Gehäusedeckel 10 umhausen die beiden Kupplungsteile der Reibungskupplung 8.

An einem radialen Innenring des Kupplungsgehäuses 23 ist weiterhin ein Nehmerzylinder 24 mit dem Gehäusedeckel 10 (drehfest) verbunden. Dieser Nehmerzylinder 24 ist bereits ein Teil der Betätigungseinrichtung 9 und weist ein zylindrisches Gehäuse 25 auf, in dem zwei Betätigungskolben 13, 27, nachfolgend als erster Betätigungskolben 13 und zweiter Betätigungskolben 27 bezeichnet, in axialer Richtung verschiebbar geführt sind. Der erste Betätigungskolben 13 des Nehmerzylinders 24 wirkt mit einem Abschnitt unmittelbar auf das erste Verschiebeelement 20 ein und ist mit diesem bewegungsgekoppelt, der zweite Betätigungskolben 27 des Nehmerzylinders 24 wirkt mit einem Abschnitt unmittelbar mit dem zweiten Verschiebeelement 22 zusammen und ist mit diesem bewegungsgekoppelt. Somit ergibt sich bei einer axialen Verschiebung/ einer Änderung der Verschiebelage des jeweiligen Betätigungskolbens 13, 27 innerhalb des Gehäuses 25 auch eine Verschiebung/ Änderung der Stellung des jeweiligen Verschiebeelementes 20 und 22 und der Anpressplatten 12, 18. Die beiden Betätigungskolben 13 und 27 sind als koaxial zueinander angeordnete Ringkolben ausgestaltet (s. Fig. 2). Alternativ dazu können die beiden Betätigungskolben 13 und 27 jedoch auch als Vollkolben ausgestaltet sein.

Der erste Betätigungskolben 13 schließt mit dem Gehäuse 25 einen ersten Druckraum 28 ein, der zweite Betätigungskolben 27 schließt mit den Gehäuse 25 einen zweiten Druckraum 29 ein. Der erste Druckraum 28 ist hydraulisch mit der Pumpe 15, nachfolgend als erste Pumpe 15 bezeichnet, verbunden. Der zweite Druckraum 29 des zweiten Betätigungskolbens 27 ist hydraulisch mit der zweiten Pumpe 30 verbunden.

Die erste und die zweite Pumpe 15 und 30 sind dabei gleich ausgestaltet und als verstellbare hydraulische Axialkolbenpumpe/ Taumelscheibenpumpe ausgestaltet, wobei deren Kolbenhub einstellbar ist. Die erste sowie die zweite Pumpe 15 und 30 sind dabei entlang des Umfangs der Kupplungsdrehachse, vorzugsweise um etwa 180° versetzt zueinander angeordnet und in einem gemeinsamen Pumpenaufnahmegehäuse 31 gehalten. Das Pumpenaufnahmegehäuse 31 ist im Wesentlichen hohlzylindrisch aufgebaut und koaxial um die beiden Getriebeeingangswellen 7 und 19 herum angeordnet. Das Pumpenaufnahmegehäuse 31 ist drehfest mit dem Kupplungsgehäuse 23 sowie mit dem Gehäusedeckel 10 verbunden. Bei einem drehenden Gehäusedeckel 10 wird somit das Pumpenaufnahmegehäuse 31 ebenfalls angetrieben und dreht sich samt den beiden Pumpen 15 und 30 um die Kupplungsdrehachse mit. Durch das Drehen des Pumpenaufnahmegehäuses 31 relativ zu dem Gehäusebauteil 16 werden die Pumpen 15 und 30 angetrieben.

Die beiden Pumpen 15 und 30, insbesondere deren Anordnung im Pumpenaufnahmegehäuse 31 sind anschaulich in Fig.7 dargestellt. Die Pumpen 15, 30 weisen jeweils eine oder mehrere, hier drei (alternativ aber auch fünf oder sechs) Pumpenkolben 32 auf, die in axialer Richtung innerhalb einer Trommel 33/ Pumpentrommel/ Revolver der Pumpe 15 oder 30 verschiebbar gelagert sind. Mit einem Endbereich sind die jeweiligen Pumpenkolben 32 in einer in ihrer Neigung verstellbaren Taumelscheibe 34 (mittels Gleitschuhen) abgestützt, wobei die Pumpenkolben 32 samt Trommel 33 relativ zu der Taumelscheibe 34 rotierbar gelagert sind. Die Taumelscheibe 34 an sich ist schräg/ quer zur Drehachse der Trommel 33 ausgerichtet und in ihrer Schrägstellung einstellbar. Dadurch ist der Kolbenhub der Pumpenkolben 32 ebenfalls einstellbar. Die Taumelscheibe 35 ist weiterhin über zwei Gleitzapfen 35, die eine Schwenkachse bilden, verdrehbar gelagert. Die Gleitzapfen 35 sind innerhalb des Pumpenaufnahmegehäuses 31 derart gelagert, dass sich die Taumelscheibe 34 um die Schwenkachse zwar verdrehen/ verkippen kann, die Gleitzapfen 35 an sich jedoch in axialer Richtung lagegesichert sind.

Der Aufbau der ersten Pumpe 15, insbesondere deren Taumelscheibe 34 ist besonders gut in den Fig.5 und 6 zu erkennen. Die zweite Pumpe 30 ist wie die erste Pumpe 15 aufgebaut, weshalb die nachfolgend näher erläuterten Merkmale der ersten Pumpe 15 auch für die zweite Pumpe 30 gelten. Zum Einstellen der Neigung der Taumelscheibe 34 ist ein Aktor 36 vorgesehen, der an einem ersten Endbereich der Taumelscheibe 34 angeordnet ist. Ein Stößel 37 des Aktors 36, liegt an dem ersten Endbereich der Taumelscheibe 34 an und ist parallel zur Längsachse der Pumpentrommel 33 hin- und herverschiebbar gelagert. An einem zweiten Endbereich der Taumelscheibe 37, welcher zweite Endbereich auf einer anderen Seite der durch die Gleitzapfen 35 gebildeten Schwenkachse als der erste Endbereich befindlich ist, ist ein Sensorkolben 38 angeordnet und an der Taumelscheibe 34 anliegend. Der Sensorkolben 38 ist nachfolgend auch in Verbindung mit Fig.9 ausführlicher beschrieben. Aus der ersten Pumpe 15 ragt weiterhin eine Pumpenantriebswelle 39 in axialer Richtung (entlang der Längsachse der Trommel 33) zu der Seite der Taumelscheibe 34 hinaus. Diese Pumpenantriebswelle 39 durchdringt die Taumelscheibe 34 und ist durch ein Durchgangsloch der Taumelscheibe 34 hindurchgeführt. Die Pumpenantriebswelle 39 weist an einer der Trommel 33 abgewandten Seite der Taumelscheibe 34 ein Zahnrad 40 auf. Das Zahnrad 40 ist als ein gerade verzahntes Zahnrad 40 ausgestaltet. Dieses Zahnrad 40 greift wiederum in eine Verzahnung 41 des Gehäusebauteils 16 ein, welches Gehäusebauteil 16 im Wesentlichen hülsenartig ausgeführt ist. Die Verzahnung 41 ist als Außenverzahnung ausgestaltet. Durch das Drehen des Pumpenaufnahmegehäuses 31 relativ zum Gehäusebauteil 16 kämmen die jeweiligen Zahnräder 40, 41 miteinander, wodurch schließlich die Pumpen 15, 30 angetrieben werden. Die Drehrichtung der Pumpentrommel 33, die auch als Pumpenantriebsrichtung bezeichnet ist, wird dabei durch die Drehrichtung des Zahnrades 40 und somit indirekt durch die Drehrichtung der jeweiligen Gegendruckplatte 10/26 vorgegeben.

Wie im Zusammenhang mit einer weiteren Ausführung der erfindungsgemäßen Kupplungsvorrichtung 1 in Fig.4 zu erkennen ist, ist das Gehäusebauteil 16 auch im Wesentlichen als ringförmiges Zahnrad ausgestaltbar, dessen Verzahnung 41 eine Innenverzahnung ist, und in welche Innenverzahnung wiederum das Zahnrad 40 eingreift. Eine solche Innenverzahnung ermöglicht eine besonders geschickte Flugbahn der Kolben. Der übrige Aufbau der Betätigungseinrichtung 9 sowie der Reibungskupplung 8 ist entsprechend der ersten Ausführungsform ausgestaltet. Durch die Relativdrehung des Pumpenaufnahmegehäuses 31 samt Pumpen 15, 30 zum (feststehenden) Gehäusebauteil 15 im Betrieb der Verbrennungskraftmaschine 3 werden daher die Pumpen angetrieben.

Die fluidleitende Verbindung zwischen der jeweiligen Pumpe 15, 30 und dem Nehmerzylinder 24 zur Steuerung der Verschiebelage des ersten und zweiten Betätigungskolbens 13 und 27 ist im Zusammenhang mit Fig.9 gut zu erkennen. Die Fig.9, die eine Prinzipskizze darstellt, zeigt der Übersichtlichkeit halber nur den Kreislauf der ersten Pumpe 15 mit dem ersten Kupplungsteil. Die in den Fig.1 bis 3 zuvor dargestellte zweite Pumpe 30 ist jedoch für den zweiten Kupplungsteil gleich der ersten Pumpe 15 funktionierend und aufgebaut.

Die erste Pumpe 15 weist einen ersten und einen zweiten Fluidanschluss 42, 44 auf. Ein erster Fluidanschluss 42 der ersten Pumpe 15 ist mit einer Druckleitung 43 hydraulisch verbunden, welche Druckleitung 43 mit dem ersten Druckraum 28 hydraulisch weiter verbunden ist. Ein zweiter Fluidanschluss 44 der ersten Pumpe 15 ist mit einem Fluidspeicherraum 45/ Reservoir hydraulisch verbunden. Jeder der beiden Fluidanschlüsse 42, 44 ist mit einer Kammer der ersten Pumpe 15 verbunden, welche Kammern je nach Stellung der Taumelscheibe 34 Saug-/oder Druckkammern ausbilden. Der Fluidspeicherraum 45 ist mit einer Volumen- Ausgleichsvorrichtung in Form eines Faltenbalgs oder einer gasgefüllten Membran versehen.

Bei dem in Fig. 9 dargestellten ersten Kupplungsteil der Kupplungsvorrichtung 1 ist die Betätigungseinrichtung 9 so ausgeführt, dass es sich um eine normal ausgerückte Kupplung handelt. In Fig. 9 ist die ausgekuppelte Stellung dargestellt. Soll die erste Anpressplatte 12 des ersten Kupplungsteils durch den ersten Betätigungskolben 13 in eine eingekuppelte Stellung verschoben werden, so ist die Taumelscheibe 34 derart in eine erste Kipprichtung (mittels dem Aktor 36) zu verschwenken, dass die Pumpenkolben 32 in die Druckleitung 43 Druckfluid hineinbefördern und somit die Druckleitung 43 mit einem (ersten) Druck beaufschlagen. Während des Druckerhöhens in der Druckleitung 43 wird somit ein Druckfluid vom Speicherraum 45 in die Druckleitung 43 hineinbefördert, so dass hierin ein (erster) Druck aufgebaut wird und der erste Betätigungskolben 13 gegen die erste Anpressplatte 12 angedrückt/ vorgespannt wird.

Um die Kupplung 8 wiederum zu öffnen, ist die Taumelscheibe 34 in eine der ersten Kipprichtung entgegengesetzte, zweite Kipprichtung zu verkippen, dass es zu einem Hinausbefördern von Druckfluid aus der Druckleitung 43 in den Fluidspeicherraum 45 kommt. Dadurch wird der Druck in der Druckleitung 43 abgebaut und bei Erreichen eines bestimmten zweiten Druckes (zweiter Druck kleiner als erster Druck) der erste Betätigungskolben 13 von der ersten Anpressplatte 12 wegbewegt. Dadurch wird dann der erste Kupplungsteil geöffnet. Soll der (erste) Druck in der Druckleitung 43 im Wesentlichen gleich/ konstant gehalten werden, so ist die Taumelscheibe 34 im Wesentlichen in einer waagrechten Position zu halten, d.h. im Wesentlichen senkrecht zur Drehachse der Trommel 33 auszurichten, so dass das in der Druckleitung 43 enthaltene Fluidvolumen konstant bleibt und der erste Betätigungskolben 13 mit einer gleich bleibenden Vorspannkraft gegen das erste Verschiebeelement 20 angedrückt bleibt.

Wie weiterhin in Fig.9 zu erkennen ist, ist hydraulisch mit der Druckleitung 43 der Sensorkolben 38 / Sensierkolben verbunden, der an dem zweiten Endbereich der wippenartig gelagerten Taumelscheibe 34 abgestützt ist. Da die jeweilige Pumpe 15, 30 als verstellbare Pumpe ausgeführt ist, deren Förderrichtung umkehrbar ist, ist der die Verschiebelage des Betätigungskolbens 13, 27 beeinflussende Fluiddruck in Abhängigkeit der Pumpenstellung steuerbar. Die die Förderrichtung der zumindest einen Pumpe 15, 30 beeinflussende Pumpenstellung ist durch den Aktor 36 veränderbar. Der Sensorkolben 38 ist dabei derart ausgestaltet und mit der Druckleitung 43 verbunden, dass, wenn sich nach einer entsprechenden Bewegung des Stößels 37 (durch eine Änderung der Erregerkraft) des Aktors 36 der Druck in der Druckleitung 43 erhöht, der Sensorkolben 38 aufgrund Druckerhöhung ausfährt (erste Pumpenstellung). Bei einem bestimmten (ersten) Druck in der Druckleitung 43 kommet es daher zu einer waagrechten Nachstellung (zurück in die Neutralstellung / in die Nullstellung) der Taumelscheibe 34 durch den Sensorkolben 38. Wird nach einer weiteren entsprechenden Bewegung des Stößels 37 (durch eine Änderung der Erregerkraft) des Aktors 36 der Druck in der Druckleitung 43 verringert (in zweiter Pumpenstellung), fährt sich der Sensorkolben 38 aufgrund des sich in der Druckleitung 43 ändernden Druckes ein, so dass es bei einem bestimmten (ersten) Druck in der Druckleitung 43 wieder zu einer waagrechten Nachstellung (Neutralstellung / in die Nullstellung) der Taumelscheibe 34 durch den Sensorkolben 38 kommt. Dadurch ist eine Druckregelung umgesetzt und der jeweilige Betätigungskolben 13, 27 entsprechend verstellbar. Die Neutralstellung der Taumelscheibe 34 ist vorzugsweise mit einer Rückstellfeder abgestützt, wobei die Rückstellfeder so an der Taumelscheibe 34 einwirkt, dass die Taumelscheibe 34 mit einer gewissen Federkraft in der Neutralstellung unterstützt ist. Die Pumpen 25, 30 sind daher (in zwei Pumpenstellungen) jeweils durch Null verstellbar, wobei die die Förderrichtung / den Förderhub einstellende Pumpenstellung durch die Lage / Stellung / Neigung der Taumelschaibe 34 einstellbar ist.

Der Sensorkolben 38 ist dabei über eine Abzweigung / einen Seitenkanal mit der Druckleitung 43 verbunden. In dieser Abzweigung ist zwischen der Druckleitung 43 und dem Sensorkolben 38 vorzugsweise eine Drossel vorhanden / integriert, die als Dämpfungselement für die im Betrieb durch die Pumpenkolben 32 erzeugten Druckschwankungen dient.

Der Aktor 36 ist vorzugsweise als elektromotorischer Aktor ausgeführt, der über ein induktives Spulensystem antreibbar ist. Hierfür ist eine Empfängerspule 46 innerhalb des Pumpenaufnahmegehäuses 31 sowie eine Senderspule 47 außerhalb des Pumpenaufnahmegehäuses 31 vorgesehen. Die Senderspule 47 treibt über ein induktives Feld die Empfängerspule 46 an.

In Zusammenhang mit Fig.8 ist ein weiteres Ausführungsbeispiel dargestellt und zeigt eine alternative Ausgestaltung des Aktors 36 über ein voice coil, ähnlich dem Antrieb von Festplattenarmen. Der Antrieb besteht aus einem stehenden Teil 48 und einem bewegenden Teil 49, wobei das bewegende Teil 49 wiederum integral mit der Taumelscheibe 34 ausgeführt ist. Je nach Ausführung ist mindestens einer der beiden Teile ein Spulensatz, der andere dann ein oder mehrere Magnete oder ebenfalls ein Spulensatz.

Auch ist es weiterhin möglich, wie es in Verbindung mit Fig.10 dargestellt ist, die Empfängerspule 46 an den ersten Endbereich der Taumelscheibe 34 direkt vorzusehen/ anzubringen um die Taumelscheibe 34 direkt über eine induktive Kraft zu bewegen.

Wie es in Verbindung mit Fig.11 zu erkennen ist, können die beiden (erste und zweite) Pumpen 15 und 30, insbesondere deren Trommeln 33, gemäß einer weiteren Ausführungsform noch etwas anders ausgestaltet sein. In dieser Ausführungsform sind die Trommeln 33 der ersten und zweiten Pumpen 15 und 30 koaxial, außerhalb voneinander angeordnet, anstelle entlang des Umfangs versetzt, wie in den Ausführungsformen zuvor.

Weiterhin ist es auch möglich, die Gleitzapfen 35 der Taumelscheibe 34 so anzuordnen, dass die Schwenkachse der Taumelscheibe 34 außermittig der Trommel 33 und dessen Längsachse angeordnet ist, wie es in Verbindung mit Fig.12 zu erkennen ist. Die Längsachse der Trommel 33 und die Schwenkachse der Taumelscheibe passieren sich beabstandet voneinander und schneiden sich nicht.

Auch ist es möglich, die Reibungskupplung 8, wie es in Fig.13 gezeigt ist, auch als Lamellenkupplung auszugestalten. Die jeweilige Kupplungsscheiben 11, 17 sind dann jeweils als eine Art Lamellenträger ausgestaltet, der mehrere scheibenförmige Kupplungslamellen aufweist. Die Gegendruckplatten 10, 26 sind wiederum als Außenträger ausgestaltbar und weisen vorzugsweise ebenfalls mehrere Lamellen auf, die mit einer Anpressplatte 12, 18 zusammenwirken und mit dieser reibkraftschlüssig verbindbar sind. Zur Betätigung jeder der beiden Kupplungsteile sind wieder die Betätigungskolben 13, 27 sowie die Verschiebeelemente 20, 22 vorgesehen.

Die Steuerelektronik für diesen Aktor 36 ist gehäusefest und bestimmt über die Ansteuerungen des Aktors die Relativlage der schrägen Ebene.

Weiterhin ist es auch möglich zum Fliehkraftausgleich einen Kompensationskolben vorzusehen, der entlang des Umfangs der Kupplung 8 entgegengesetzt zur Pumpe 15, 30 angeordnet ist. Ein Anschluss der Pumpe wäre dann am Kolben, der andere am Kompensationskolben und am Reservoir 45.

In anderen Worten ausgedrückt ist durch die erfindungsgemäße Kupplungsvorrichtung 1 ein vollintegriertes Modul bestehend aus Kupplung 8, Aktorik / Betätigungseinrichtung 9 und ggf. Kühlung umgesetzt. Dabei werden ein oder zwei Verstellpumpen (erste und / oder zweite Pumpe 15, 30) für die Aktuierung in die Kupplung 8/ die Kupplungsvorrichtung 1 eingebaut, je nach Ausführung als Einzelkupplung oder Doppelkupplung. In die Kupplungsvorrichtung 1 eingebaut sind: Die Pumpe 15/ 30 als Geber, ein Ringkolben (Betätigungskolben 13/ 27) bzw. mehrere Vollkolben (Betätigungskolben 13/27) als Nehmer, ein Reservoir (Fluidspeicherraum 45) und ein Element zur Steuerung der Verstellpumpe 15/30.

Die Pumpe 15, 30 ist somit mit dem Nehmerzylinder 24 und dem Reservoir 45 in das Kupplungsmodul 1 integriert. Das Modul 1 kann ausgeführt sein als Doppelkupplung mit zwei Pumpen 15, 30. Die Pumpe 15, 30 kann als Verstellpumpe ausgeführt sein. Die Verstellvorrichtung wird über jeweils einen Steueraktor 36 angesteuert. Die Verstellvorrichtung kann mit oder ohne Lastrückführung ausgeführt sein. Die Verstellpumpen 15, 30 können in unterschiedlichen Verdrängerprinzipien realisiert werden. Exemplarisch sind Axial- und Radialkolben- sowie Flügelzellenmaschinen zu nennen.

Die Pumpe 15, 30 wird durch die Drehung der Kupplung 8 angetrieben (Relativbewegung Kupplung zu Getriebegehäuse/ Gehäuse). Die Abstützung des Pumpenantriebes erfolgt normalerweise über die nicht rotierenden, mit den Gehäuseteilen drehfest verbundenen Elemente. Im Falle eines Hybridantriebes ist es jedoch notwendig die Pumpen auch bei stehender Brennkraftmaschine antreiben zu können. Dies wird möglich, wenn die Abstützung des Pumpenantriebes mit der E-Maschine des Antriebes gekoppelt ist. Die Kupplung 8 ist vorzugsweise direktbetätigt, normal offen/ normal ausgerückt. Andere Ausführungsformen der Kupplung (hebelbetätigt, normal geschlossen, ...) sind grundsätzlich möglich. Weiterhin ist eine Kombination der rotierenden Aktorik 36 sowohl mit einem sog. Trocken-Kupplungs-System als auch mit einem sog. Nass-Kupplungs-System möglich. Beide Pumpen 15, 30 befinden sich auf dem nahezu gleichen Durchmesser des Pumpenaufnahmegehäuses 31 mit ihren Auslässen/ ersten Fluidanschlüssen 42 auf dem Durchmesser des jeweiligen Betätigungskolbens 13, 27 des Nehmerzylinders 24 um Fliehkrafteinflüsse auf das Druckfluid zu reduzieren.

Alternativ kann das Reservoir 45 mit Kompensationskolben verbunden werden, um so die Fliehkrafteinflüsse zu reduzieren. Damit müssen die Pumpen 15, 30 nicht mehr auf demselben Radius wie die Nehmerkolben/ Betätigungskolben 13, 27 sitzen. Die Druckermittlung an den Verstellkolben wird günstiger Weise als Differenzdruckermittlung mit Differenzdrucksensorkolben zwischen Reservoir 45 zu Druckraum ausgeführt. Damit entfallen die Fliehkrafteffekte die sich aus dem hydrostatischen Druck im Reservoir 45 ergeben. Die Steuerkraft kann innerhalb oder außerhalb des Moduls 1 erzeugt werden. Besonders vorteilhaft ist es, die Steuerkraft mit elektromagnetischen Gebern zu erzeugen, die sich im Kupplungsmodul 1 befinden. Der dafür benötigte Strom wird drahtlos über Spulen in die Kupplungsvorrichtung 1 übertragen.

Alternativ zu einer direkten Übertragung der Signale über den Luftspalt, kann die Stellenergie auch aus der Motordrehung in einem Generator erzeugt werden. Dabei erfolgt die Ansteuerung über den Erregerstrom im Stator des Generator-Überträgers. Hier muss dann von der Ansteuerung die Drehzahl der Kupplung 8 berücksichtigt werden.

Die (Differenz-) Drucksensoren ergeben zusammen mit der Steuerkraft einen Druckregler mit P-Charakteristik. Insgesamt ergibt sich über die Steuerkraft/ das Steuersignal eine Drucksteuerung der Kupplung 8.

Um eine geschlossene Kupplung 8 nach unerwartetem Motorstop zu verhindern kann eine definierte, kleine Blende (Mini-Blende) vom Druckraum zum Reservoir 45 eingebaut sein.

Fig. 1 zeigt den drehenden Teil des H-Clutch Moduls/ der Kupplungsvorrichtung 1, sowie die stehende Verzahnung 41, die am Gehäuse/ Getriebegehäuse, bzw. der Kupplungsglocke zu befestigen ist. Das Modul 1 lässt sich grob unterteilen in einen Kupplungsbereich und einen Hydraulikteil/ Betätigungsbereich. Die Schnittstellen des Moduls 1 sind die Steckverzahnung zum Zweimassenschwungrad, bzw. Motor, das Lager 52 mit dem die Kupplung 8 zum Gehäuse gelagert ist, die beiden Getriebeeingangswellen 7, 19 und die stehende Verzahnung 41, sowie die Energieübertragung. Das Übertragen der Energie ist hier nicht dargestellt. Sinnvoll erscheint - da nur ein Steuerstrom und nicht die Betätigungsenergie zu übertragen ist - eine Übertragung des Steuerstromes mittels einer berührungslosen Technologie über Spulen.

Fig. 2 zeigt einen Schnitt durch das Modul 1. Der Aufbau wird hier von links nach rechts erklärt. Die Kupplung 8 wird über eine Steckverzahnung 53 mit dem Zweimassenschwungrad verbunden. Am Ende der Getriebeeingangswelle 1 befindet sich ein Pilotlager 54. Beide Kupplungsteile/ Teilkupplungen sind direktbetätigt und dadurch normally open. Die Anpressplatten 12, 18 der beiden Teilkupplungen sind über Drucktöpfe 20, 22 mit ihrem jeweiligen Geberkolben/ Betätigungskolben 13, 27 des CSC (Central Clutch Cylinder)/ Nehmerzylinders 24 verbunden. Das CSC 24 ähnelt einem normalen, stehenden CSC 24. Dabei befindet sich zwischen den Ringkolben 13, 27 des CSC 24 und dem Drucktöpfen 20, 22 kein Lager, da das CSC 24 mit dreht. Dies verringert das Schleppmoment. Das Hauptlager 52 befindet sich zwischen Kupplung 8/ Kupplungsbereich und Hydraulik/ Pumpenaufnahmegehäuse 31, da diese Lage nah dem Schwerpunkt ist. Anders als bei von außen betätigten Kupplungen 8 sieht dieses Lager 52 keine Axialkräfte. Der Durchmesser des stehenden Lagerrings kann vergrößert werden, um ein Aufstecken des gesamten Moduls 1 zu ermöglichen.

Die Pumpen 15, 30 zum Betätigen der Teilkupplungen sind in einem gemeinsamen Gehäuse, dem Pumpenaufnahmegehäuse 31, untergebracht. Jede Teilkupplung hat ihre eigene Pumpe 15/ 30. Die Pumpen 15, 30 sind hier als verstellbare Kolbenpumpe mit Revolver 33 und Kolben 32 ausgeführt. Die Übersetzung der Pumpe 15, 30 wird dabei über eine Taumelscheibe 34 verändert, und auch die Wirkrichtung umgekehrt. Die Pumpen 15, 30 sind jeweils mit einem Reservoir 45 und einem CSC 24 verbunden. So kann das Fluid zwischen CSC 24 und Reservoir 45 hin- und her gepumpt werden. Der Antrieb der Pumpenrevolver 33 erfolgt über ein Zahnrad 40 an der Pumpenwelle/ Pumpenantriebswelle 39, welches in ein feststehendes Zahnrad 40 eingreift.

Fig. 3 zeigt noch einmal dieselbe Ansicht wie Fig. 2, wobei hier einige Teile der Pumpenanordnung vom Schnitt ausgenommen sind. Bei der oberen Pumpe 15/ 30 ist der Sensorkolben 38 zu sehen, der mit dem Kupplungsdruck beaufschlagt ist und so steuernd auf die Neigung der Taumelscheibe 34 eingreift. Bei der unteren Pumpe 15/ 30 ist der Aktor 36 abgebildet, über dessen Steuerkraft der Pumpendruck und damit das Kupplungsmoment eingestellt wird.

Fig. 4 zeigt als Alternative die gleiche Anordnung mit einer Innenverzahnung am Gehäuse/ Gehäusebauteil 16. Durch die Ausführung als Innenzahnrad ändert sich die Bewegungsbahn der Kolben 32 so, dass die resultierende Bewegung weniger Fliehkraft sieht. Als weitere Ausführungsmöglichkeit kommt auch die Kopplung über einen Riementrieb in betracht.

Fig. 5 zeigt die Pumpeneinheit einer Teilkupplung im Schnitt. Dabei können beide Teilkupplungen ein gemeinsames oder getrennte Reservoirs 45 haben. Das Reservoir 45 ist in jedem Fall mit einer Maßnahme zum Druckausgleich auszustatten, das sich das darin enthaltene Volumen mit der Betätigung ändert. In Frage kommen dabei z.B. Faltenbalg, Gasvolumen (optional mit Membran getrennt).

Die hier dargestellte Kolbenpumpe 15, 30 hat drei Zylinder/ Pumpenzylinder und Pumpenkolben 32. In der Praxis ist eine Ausführung mit mehr Zylindern (fünf oder sechs) vermutlich sinnvoller, da sich dadurch sowohl die Druckschwankungen, als auch die Schwankung des Kippmomentes auf die Taumelscheibe(60) verringern. Hier sind Sensorkolben 38 und Steueraktor 36 auf entgegenliegenden Seiten/ Endbereichen der Taumelscheibe 34 abgebildet. Dies erleichtert ein Ausgleichen der Taumelscheibe 34 gegen Axialanregungen und Fliehkraft.

Die Taumelscheibe 34 ist in der Mitte kippbar gelagert (Gleitlagerzapfen 35). Diese Lage minimiert die Schwankungen des durch die Kolben 32 verursachten Kippmomentes.

Fig. 6 zeigt ein Pumpenmodul ohne Gehäuse 31. Der Aktor 36 ist dabei vergleichbar mit den Magnetspulen aus herkömmlichen Ventilen.

Fig. 7 zeigt die Lage beider Pumpen 15, 30 zueinander. Um die gesamte Einheit gewuchtet zu lassen, sind Pumpenrevolver 33, Steuerzylinder, Aktor 36 und Reservoir 45 der Doppelkupplung symmetrisch um die Getriebewelle 7/ 19 angeordnet. Dabei sind die Pumpen 15, 30 leicht unterschiedlich gedreht, so dass der Auslass jeder Pumpe 15, 30 sich auf dem mittleren Radius des zugehörigen CSCs 24 befindet.

Fig. 8 zeigt eine alternative Aktorik über Voice Coil, ähnlich dem Antrieb von Festplattenarmen. Der Antrieb besteht aus einem stehenden Teil 48 und einem bewegenden Teil 49. Je nach Ausführung ist mindestens einer der beiden Teile ein Spulensatz, der andere dann ein oder mehrere Magnete oder ebenfalls ein Spulensatz.

Fig. 9 zeigt das Prinzipschaubild am Beispiel einer Einzelkupplung. Der Antriebsstrang 2 besteht aus Motor/ Verbrennungskraftmaschine 3, Kupplungsvorrichtung 1, Getriebe 4 und Rad 5. Die Energie wird vom Motor 3 über die Kurbelwelle 6 in die Kupplung 8 übertragen. Dort kann die Verbindung zwischen Scheibe/ Kupplungsscheibe 11 und Anpressplatte 12 und Zentralplatte/ Gegendruckplatte 10 geschlossen werden, um den Motor 3 mit dem Getriebe 4 zu verbinden. Die Anpressplatte 12 wird durch einen Ringkolben 13 über einen Drucktopf 20 betätigt. Der Druck auf den Kolben 13 wird von einer Verstellpumpe 15 mit Richtungsumkehr bereitgestellt. Die Verstellpumpe 15 wird durch eine Zahnverbindung 40 zu einem feststehenden Zahnrad 41 angetrieben. Die Übersetzung der Verstellpumpe 15 wird geregelt über einen Sensorkolben 38, der mit dem Kupplungsdruck beaufschlagt ist und einen Steueraktor 36. Der Steueraktor 36 bezieht seinen Strom über eine drahtlose Spulenverbindung (46, 47) aus einem Steuergerät. In der Zuleitung des Steuerkolbens 38 kann ein Dämpfer eingebaut sein.

Fig. 10 zeigt die Möglichkeit, ohne einen Aktor an der Kupplung die Steuerkraft direkt von au-ßen auf die Taumelscheibe 34 zu bringen.

Die Kraft wird von der Sendespule 47 auf eine Empfängerspule 46 oder einen Magneten übertragen. Je nach Anordnung bewegt sich der Empfänger dabei axial oder radial. (axial: Hat den Vorteil, dass Drehungleichförmigkeiten keine Rolle spielen; radial: Hierbei kann die Kraft über Wirbelstrombremse oder generatorisch übertragen werden. Dies hat den Vorteil eines noch geringeren Energieaufwands. Allerdings ist der Regelungsaufwand größer, da hier die Drehzahl berücksichtigt werden muss.)

Da die Pumpen 15, 30 ihre Energie aus dem Antriebsstrang 2 beziehen, kann die Kupplung 8 bei der hier gezeigten Konfiguration nur geschlossen werden, wenn sie sich auch dreht. Dies kann über Freiläufe überwunden werden, die jeweils die größere Differenzdrehzahl zwischen Kupplung 8 und Gehäuse 16 oder Kupplung 8 und Elektromotor zum Betreiben der Pumpe 15 nutzen.

Fig. 11 zeigt eine alternative Ausgestaltung der Kolbenpumpe 15. Dabei laufen die Kolben direkt im Pumpengehäuse um die Welle. Das Pumpengehäuse/ Pumpenaufnahmegehäuse 31 dient also gleichzeitig als Revolver 33 beider Pumpen 15, 30. Die Pumpen 15, 30 sind so radial gestapelt, dass sich die Kolben 32 auf dem gleichen Radius befinden, wie ihr zugehöriges CSC 24.

Fig. 12 zeigt eine mögliche Anordnung der Taumelscheibe 34. In diesem Fall ist der Kipppunkt der Taumelscheibe 34 außerhalb der Mitte. Dadurch ergibt sich die sonst vom Sensorkolben 38 erzeugte Kraft durch die normalen Kolben 32. Es ist also nur noch der Steueraktor 36 erforderlich. Nachteil dieser Anordnung ist die etwas größere Schwankung des Kippmomentes auf die Taumelscheibe 34.

Fig. 13 zeigt eine Ausführung als nasse Doppelkupplung. Die Kupplung 8 ist in diesem Beispiel radial gestapelt. Bei der Ausführung mit einer nassen Doppelkupplung ist kein abgeschlossenes Reservoir 45 erforderlich, sondern die Pumpen 15, 30 können an den Kühlölstrom angeschlossen werden. Vorzugsweise kann dann auf das Reservoir 45 komplett verzichtet werden oder das Reservoir 45 ist in radialer Richtung nach innen offen.

### Bezugszeichenliste

- 1,1': Kupplungsvorrichtung
- 2: Antriebsstrang
- 3: Verbrennungskraftmaschine
- 4: Getriebe
- 5: Rad
- 6: Kurbelwelle
- 7: Getriebeeingangswelle / erste Getriebeeingangswelle
- 8: Kupplung/ Reibungskupplung
- 9: Betätigungseinrichtung
- 10: erste Gegendruckplatte / Gehäusedeckel
- 11: Kupplungsscheibe / erste Kupplungsscheibe
- 12: Anpressplatte / erste Anpressplatte
- 13: Betätigungskolben / erster Betätigungskolben
- 14: Antriebseinheit
- 15: erste Pumpe
- 16: Gehäusebauteil
- 17: zweite Kupplungsscheibe
- 18: zweite Anpressplatte
- 19: zweite Getriebeeingangswelle
- 20: erstes Verschiebeelement
- 22: zweites Verschiebeelement
- 23: Kupplungsgehäuse
- 24: Nehmerzylinder
- 25: Gehäuse
- 26: zweite Gegendruckplatte
- 27: zweiter Betätigungskolben
- 28: erster Druckraum
- 29: zweiter Druckraum
- 30: zweite Pumpe
- 31: Pumpenaufnahmegehäuse
- 32: Pumpenkolben
- 33: Trommel
- 34: Taumelscheibe
- 35: Gleitzapfen
- 36: Aktor
- 37: Stößel
- 38: Sensorkolben
- 39: Pumpenantriebswelle
- 40: Zahnrad
- 41: Verzahnung
- 42: erster Fluidanschluss
- 43: Druckleitung
- 44: zweiter Fluidanschluss
- 45: Fluidspeicherraum
- 46: Empfängerspule
- 47: Senderspule
- 48: stehendes Teil
- 49: bewegendes Teil
- 52: Lager
- 53: Steckverzahnung
- 54: Pilotlager

## Patentansprüche

1. Kupplungsvorrichtung (1) für einen Antriebsstrang (2) eines Kraftfahrzeuges, mit einer vorzugsweise in axialer Richtung der Kupplungsvorrichtung (1) verschiebbaren Anpressplatte (12, 18), wobei die Anpressplatte (12, 18) in einer eingekuppelten Stellung der Kupplungsvorrichtung (1) eine Kupplungsscheibe (11, 17) gegen eine, mit einer Kurbelwelle (6) einer Verbrennungskraftmaschine (3) verbindbare Gegendruckplatte (10, 26) anpresst, und mit einer, einen verschiebbaren Betätigungskolben (13, 27) aufweisenden Betätigungseinrichtung (9), wobei die Verschiebelage des Betätigungskolbens (13, 27) die Stellung der Anpressplatte (12, 18) festlegt und der Betätigungskolben (13, 27) zum Verschieben der Anpressplatte (12, 18) zwischen der eingekuppelten Stellung und einer ausgekuppelten Stellung von einer Antriebseinheit (14) der Betätigungseinrichtung (9) antreibbar ist, **dadurch gekennzeichnet, dass** die Antriebseinheit (14) zumindest eine Pumpe (15, 30) aufweist, wobei die zumindest eine Pumpe (15, 30) in einem Pumpenaufnahmegehäuse (31) aufgenommen ist und das Pumpenaufnahmegehäuse (31) drehfest mit der Gegendruckplatte (10, 26) verbunden ist.

2. Kupplungsvorrichtung (1) nach Anspruch 1, **dadurch gekennzeichnet, dass** die zumindest eine Pumpe (15, 30) derart ausgestaltet und angeordnet ist, dass sie durch eine Relativbewegung zu einem Gehäusebauteil (16), das in einem ersten Betriebszustand, etwa bei angeschalteter Verbrennungskraftmaschine (3), gehäusefest verbunden ist, antreibbar ist.

3. Kupplungsvorrichtung (1) nach Anspruch 2, **dadurch gekennzeichnet, dass** das Gehäusebauteil (16) in einem zweiten Betriebszustand, etwa bei ausgeschalteter Verbrennungskraftmaschine (3), über eine weitere, zweite Antriebseinheit antreibbar ist.

4. Kupplungsvorrichtung (1) nach einem der Ansprüche 1 bis 3, **dadurch gekennzeichnet, dass** die zumindest eine Pumpe (15, 30) zwei Fluidanschlüsse (42, 44) aufweist, wobei ein erster Fluidanschluss (42) mit einem den Betätigungskolben (13) aufnehmenden Nehmerzylinder (24) verbunden ist und ein zweiter Fluidanschluss (44) mit einem Fluidspeicherraum (45) verbunden ist.

5. Kupplungsvorrichtung (1) nach einem der Ansprüche 1 bis 4, **dadurch gekennzeichnet, dass** die zumindest eine Pumpe (15, 30) als eine verstellbare Pumpe ausgeführt ist, deren Förderrichtung unabhängig von der Pumpenantriebsrichtung umkehrbar ist und dessen Fördervolumen durch Null verstellbar ist, wobei ein die Verschiebelage des Betätigungskolbens (13, 27) beeinflussender Fluiddruck in Abhängigkeit der Pumpenstellung steuerbar ist.

6. Kupplungsvorrichtung (1) nach einem der Ansprüche 1 bis 5, **dadurch gekennzeichnet, dass** die die Förderrichtung und das Fördervolumen der zumindest einen Pumpe (15, 30) beeinflussende Pumpenstellung durch einen Aktor (36) veränderbar ist.

7. Kupplungsvorrichtung (1) nach Anspruch 6, **dadurch gekennzeichnet, dass** die zumindest eine Pumpe (15, 30) eine Druckregelung aufweist, die die zumindest eine Pumpe (15, 30) bei Erreichen eines bestimmten, durch ein Steuersignal am Aktor (36) vorgegebenen, an dem Betätigungskolben (13, 27) und einem Sensorkolben (38) anliegenden Fluiddrucks, in eine Neutralstellung zurückstellt, in welcher Neutralstellung der Fluiddruck konstant gehalten ist.

8. Kupplungsvorrichtung (1) nach einem der Ansprüche 1 bis 7, **dadurch gekennzeichnet, dass** der Aktor (36) elektromagnetisch, etwa über ein induktives Spulensystem oder eine Wirbelstrombremse, betätigbar ist.

9. Kupplungsvorrichtung (1) nach einem der Ansprüche 1 bis 8, **dadurch gekennzeichnet, dass** das Pumpenaufnahmegehäuse (31) koaxial zu einer im Betriebszustand der Kupplungsvorrichtung (1) drehfest mit der Kupplungsscheibe (11, 17) verbundenen Getriebeeingangswelle (7, 19) eines Getriebes (4) angeordnet ist.

10. Kupplungsvorrichtung (1) nach einem der Ansprüche 1 bis 9, **dadurch gekennzeichnet, dass** das Pumpenaufnahmegehäuse (31) in axialer Richtung neben einem die Anpressplatte (12, 18) und die Kupplungsscheibe (11, 17) umhüllenden und drehfest mit der Gegendruckplatte (10, 26) verbundenen Kupplungsgehäuse (23) angeordnet ist, wobei das Kupplungsgehäuse (23) vorzugsweise die Gegendruckplatte (10, 26) drehfest mit dem Pumpenaufnahmegehäuse (31) verbindet.

## Claims

1. Clutch apparatus (1) for a drive train (2) of a motor vehicle, having a pressure plate (12, 18) which can preferably be displaced in the axial direction of the clutch apparatus (1), the pressure plate (12, 18) pressing a clutch plate (11, 17), in an engaged position of the clutch apparatus (1), against a counter-pressure plate (10, 26) which can be connected to a crankshaft (6) of an internal combustion engine (3), and having an actuating device (9) which has a displaceable actuating piston (13, 27), the displacement position of the actuating piston (13, 27) fixing the position of the pressure plate (12, 18), and it being possible for the actuating piston (13, 27) to be driven by a drive unit (14) of the actuating device (9) in order to displace the pressure plate (12, 18) between the engaged position and a disengaged position, **characterized in that** the drive unit (14) has at least one pump (15, 30), the at least one pump (15, 30) being received in a pump receptacle housing (31), and the pump receptacle housing (31) being connected fixedly to the counter-pressure plate (10, 26) so as to rotate with it.

2. Clutch apparatus (1) according to Claim 1, **characterized in that** the at least one pump (15, 30) is configured and arranged in such a way that it can be driven by way of a relative movement with respect to a housing component (16) which is connected fixedly in the housing in a first operating state, for instance when the internal combustion engine (3) is switched on.

3. Clutch apparatus (1) according to Claim 2, **characterized in that** the housing component (16) can be driven via a further, second drive unit in a second operating state, for instance when the internal combustion engine (3) is switched off.

4. Clutch apparatus (1) according to one of Claims 1 to 3, **characterized in that** the at least one pump (15, 30) has two fluid connectors (42, 44), a first fluid connector (42) being connected to a slave cylinder (24) which receives the actuating piston (13), and a second fluid connector (44) being connected to a fluid storage space (45).

5. Clutch apparatus (1) according to one of Claims 1 to 4, **characterized in that** the at least one pump (15, 30) is configured as a variable displacement pump, the delivery direction of which can be reversed independently of the pump drive direction and the delivery volume of which can be adjusted via zero, it being possible for a fluid pressure which influences the displacement position of the actuating piston (13, 27) to be controlled in a manner which is dependent on the pump position.

6. Clutch apparatus (1) according to one of Claims 1 to 5, **characterized in that** the pump position which influences the delivery direction and the delivery volume of the at least one pump (15, 30) can be varied by way of an actuator (36).

7. Clutch apparatus (1) according to Claim 6, **characterized in that** the at least one pump (15, 30) has a pressure regulating means which resets the at least one pump (15, 30) into a neutral position if a defined fluid pressure is reached which is predetermined by way of a control signal at the actuator (36) and prevails at the actuating piston (13, 27) and a sensor piston (38), in which neutral position the fluid pressure is kept constant.

8. Clutch apparatus (1) according to one of Claims 1 to 7, **characterized in that** the actuator (36) can be actuated electromagnetically, for instance via an inductive coil system or an eddy current brake.

9. Clutch apparatus (1) according to one of Claims 1 to 8, **characterized in that** the pump receptacle housing (31) is arranged coaxially with respect to a transmission input shaft (7, 19) of a transmission (4), which transmission input shaft (7, 19) is connected fixedly to the clutch plate (11, 17) so as to rotate with it in the operating state of the clutch apparatus (1).

10. Clutch apparatus (1) according to one of Claims 1 to 9, **characterized in that** the pump receptacle housing (31) is arranged in the axial direction next to a clutch housing (23) which encloses the pressure plate (12, 18) and the clutch plate (11, 17) and is connected fixedly to the counter-pressure plate (10, 26) so as to rotate with it, the clutch housing (23) preferably connecting the counter-pressure plate (10, 26) fixedly to the pump receptacle housing (31) so as to rotate with it.

## Revendications

1. Dispositif d'embrayage (1) pour une chaîne cinématique (2) d'un véhicule automobile, comprenant une plaque de pressage (12, 18) pouvant de préférence être déplacée dans la direction axiale du dispositif d'embrayage (1), la plaque de pressage (12, 18), dans une position embrayée du dispositif d'embrayage (1), pressant un disque d'embrayage (11, 17) contre une plaque de contre-pression (10, 26) pouvant être raccordée à un vilebrequin (6) d'un moteur à combustion interne (3), et comprenant un dispositif d'actionnement (9) présentant un piston d'actionnement déplaçable (13, 27), la position de déplacement du piston d'actionnement (13, 27) déterminant la position de la plaque de pressage (12, 18) et le piston d'actionnement (13, 27), pour déplacer la plaque de pressage (12, 18) entre la position embrayée et une position débrayée, pouvant être entraîné par une unité d'entraînement (14) du dispositif d'actionnement (9), **caractérisé en ce que** l'unité d'entraînement (14) présente au moins une pompe (15, 30), l'au moins une pompe (15, 30) étant reçue dans un boîtier de réception de pompe (31) et le boîtier de réception de pompe (31) étant raccordé de manière solidaire en rotation à la plaque de contre-pression (10, 26).

2. Dispositif d'embrayage (1) selon la revendication 1, **caractérisé en ce que** l'au moins une pompe (15, 30) est configurée et disposée de telle sorte qu'elle puisse être entraînée par un mouvement relatif par rapport à un composant de boîtier (16) qui, dans un premier état de fonctionnement, tel que lorsque le moteur à combustion interne (3) est mis en marche, est raccordé de manière fixée au boîtier.

3. Dispositif d'embrayage (1) selon la revendication 2, **caractérisé en ce que** le composant de boîtier (16), dans un deuxième état de fonctionnement, tel que lorsque le moteur à combustion interne (3) est arrêté, peut être entraîné par une deuxième unité d'entraînement supplémentaire.

4. Dispositif d'embrayage (1) selon l'une quelconque des revendications 1 à 3, **caractérisé en ce que** l'au moins une pompe (15, 30) présente deux raccords de fluide (42, 44), un premier raccord de fluide (42) étant raccordé à un cylindre récepteur (24) recevant le piston d'actionnement (13) et un deuxième raccord de fluide (44) étant raccordé à un espace de stockage de fluide (45).

5. Dispositif d'embrayage (1) selon l'une quelconque des revendications 1 à 4, **caractérisé en ce que** l'au moins une pompe (15, 30) est réalisée sous forme de pompe réglable, dont le sens de refoulement peut être inversé indépendamment du sens d'entraînement de la pompe, et dont le volume de refoulement peut passer par zéro, une pression de fluide influençant la position de déplacement du piston d'actionnement (13, 27) pouvant être commandée en fonction de la position de la pompe.

6. Dispositif d'embrayage (1) selon l'une quelconque des revendications 1 à 5, **caractérisé en ce que** la position de la pompe influençant le sens de refoulement et le volume de refoulement de l'au moins une pompe (15, 30) peut être modifiée par un actionneur (36).

7. Dispositif d'embrayage (1) selon la revendication 6, **caractérisé en ce que** l'au moins une pompe (15, 30) présente une régulation de pression qui ramène dans une position neutre l'au moins une pompe (15, 30), à l'obtention d'une pression de fluide déterminée, prédéfinie par un signal de commande au niveau de l'actionneur (36) et s'appliquant sur le piston d'actionnement (13, 27) et sur un piston de capteur (38), dans laquelle position neutre la pression de fluide est maintenue constante.

8. Dispositif d'embrayage (1) selon l'une quelconque des revendications 1 à 7, **caractérisé en ce que** l'actionneur (36) peut être commandé de manière électromagnétique, par exemple par le biais d'un système de bobine d'induction ou d'un frein à courants de Foucault.

9. Dispositif d'embrayage (1) selon l'une quelconque des revendications 1 à 8, **caractérisé en ce que** le boîtier de réception de pompe (31) est disposé coaxialement par rapport à un arbre d'entrée de boîte de vitesses (7, 19) d'une boîte de vitesses (4), raccordé de manière solidaire en rotation au disque d'embrayage (11, 17) dans l'état de fonctionnement du dispositif d'embrayage (1).

10. Dispositif d'embrayage (1) selon l'une quelconque des revendications 1 à 9, **caractérisé en ce que** le boîtier de réception de pompe (31) est disposé dans la direction axiale à côté d'un boîtier d'embrayage (23) enveloppant la plaque de pressage (12, 18) et le disque d'embrayage (11, 17) et raccordé de manière solidaire en rotation à la plaque de contre-pression (10, 26), le boîtier d'embrayage (23) raccordant de préférence la plaque de contre-pression (10, 26) de manière solidaire en rotation au boîtier de réception de pompe (31).
